# EUROPÄISCHE PATENTSCHRIFT

(11) **EP 0 720 763 B1**
(45) Veröffentlichungstag und Bekanntmachung des Hinweises auf die Patenterteilung: **06.08.1997**
(21) Anmeldenummer: 93923481.1
(22) Anmeldetag: 16.10.1993
(51) Int. Cl.: G06K 15/00, G06K 1/12

(54) **VERFAHREN UND VORRICHTUNG ZUM BEDRUCKEN VON ETIKETTEN VERSCHIEDENER GRÖSSEN**
PROCESS AND DEVICE FOR PRINTING LABELS OF DIFFERENT SIZES
PROCEDE ET DISPOSITIF PERMETTANT D'IMPRIMER DES ETIQUETTES DE DIFFERENTES DIMENSIONS

(30) Priorität: 26.03.1993 DE 4309750
(43) Veröffentlichungstag der Anmeldung: 10.07.1996
(73) Patentinhaber: F & O Electronic Systems GmbH, D-69239 Neckarsteinach (DE)
(72) Erfinder: OBSTFELDER, Günther, D-69469 Weinheim-Lützelsachsen (DE); IHLEFELD, Joachim, D-01097 Dresden (DE)
(74) Vertreter: Mierswa, Klaus, Dipl.-Ing.
(86) Internationale Anmeldenummer: EP9302861
(87) Internationale Veröffentlichungsnummer: WO9423393

(56) Entgegenhaltungen:
- EP-A- 0 457 165
- US-A- 4 546 449
- PATENT ABSTRACTS OF JAPAN vol. 17, no. 103 (M-1374)2. März 1993 & JP,A,04 294 179 (NEC CORP.) 19. Oktober 1992
- PATENT ABSTRACTS OF JAPAN vol. 15, no. 228 (M-1123)11. Juni 1991 & JP,A,03 069 436 (TERAOKA SEIKO CO. LTD.) 25. März 1991

## Beschreibung

### Technisches Gebiet:

Die Erfindung betrifft ein Verfahren zum Bedrucken von Etiketten, die einzeln oder auf einem Trägerband angeordnet sind gemäß dem Oberbegriff des Patentanspruchs 1.

### Stand der Technik:

Durch die US-A-4,264,396 ist ein Handetikettiergerät bekannt geworden, bei dem die Betätigung eines Schalters einen Druck- und Ausgabezyklus für ein zu bearbeitendes Etikett einleitet. Ein als Signalgabeeinrichtung arbeitender Sensor liefert ein Nachweissignal für auf dem Etikettenband vorgesehene beabstandete Marken, um die Energieversorgung des Transportmotors für die Etiketten zu stoppen. Dadurch ist der Sensor zur Lieferung eines Signals an die Verarbeitungseinrichtung wirksam, so daß die Zuführung des Etikettenbandes zur Korrektur jeder Abweichung der Lagegenauigkeit der gedruckten Information bezüglich der Längskanten des Etiketts justiert werden kann. Dazu ist die Stellungsbeziehung zwischen dem Sensor, dem Druckkopf und der Etikettenanbringeinrichtung entlang des Weges des Etikettenstreifens zur angemessenen Positionierung zweier Etiketten jeweils zum Ablösen vom Band und zum Drucken geeignet ausgewählt. Dadurch wird eine feste Stellungsbeziehung zwischen dem Etikett und dem Druckkopf zu Beginn des Druckens beibehalten, und das Drucken wird immer bei Betätigung des Schalters begonnen. Der Ort auf dem Etikett, an dem das Drucken beginnt, ist dadurch bezüglich der vorderen Kante des Etiketts unveränderlich festgelegt, ohne irgendeine Abänderung zu erlauben. Eine Anpassung der zu druckenden geometrischen Größe der Daten an das Format des Etiketts oder ein verändertes Plazieren der Daten ist nicht möglich. Aufgrund der Beschränkung auf eine Schriftart und/oder ein Format ist die Lösung für dieses Gerät akzeptabel.

Durch die EP-B2-0 278 075 ist ein Handetikettiergerät mit einem einen von Hand zu erfassenden Handgriff aufweisenden Gehäuse bekannt geworden, das eine Einrichtung zur Halterung einer Etikettenvorratsrolle eines zusammengesetzten Bandes mit an einem Tragstreifen lösbar anhaftenden Etiketten aufweist, sowie eine Einrichtung zum Bedrucken eines Etiketts in einer Druckstellung, eine Einrichtung zum Ablösen des bedruckten Etiketts von dem Tragstreifen, eine angrenzend an die Ablöseeinrichtung angeordnete Etikettenanbringeinrichtung, eine Einrichtung zum Transportieren des Bandes, um ein bedrucktes Etikett von dem Tragstreifen an der Ablöseeinrichtung abzulösen und das bedruckte Etikett in eine Etikettenanbringbeziehung mit der Etikettenanbringeinrichtung zu bringen und ein anderes Etikett in die Druckstellung zu transportieren, eine Einrichtung zum Eingeben ausgewählter, zu druckender Daten, wobei die Druckeinrichtung einen thermographischen Druckkopf mit einer Vielzahl einzeln anwählbarer, von einer elektrischen Energiequelle energieversorgter Druckelemente zum Bedrucken eines thermographischen Etiketts in der Druckstellung während des Transports des Bandes durch die Transporteinrichtung, eine an die Dateneingabeeinrichtung angeschlossene Einrichtung zur elektrischen Verarbeitung der ausgewählten Daten und zur Erregung der einzelnen Druckelemente in einer durch die ausgewählten Daten bestimmten Reihenfolge zum Drucken der Daten auf dem Etikett, eine an die Datenverarbeitungseinrichtung angeschlossene manuelle Einrichtung zum Starten des Betriebs der Transporteinrichtung und zur Freigabe des Bedruckens eines Etiketts und eine an die Datenverarbeitungseinrichtung elektrisch angekoppelte Signalgabeeinrichtung zur Lieferung eines eine Grenze zwischen benachbarten Etiketten auf dem Band darstellenden Signals aufweist, um dadurch den Betrieb der Transporteinrichtung ansprechend auf das Signal zu beenden. Die Verarbeitungseinrichtung weist eine Einrichtung für eine Bestimmung auf, ob das Etikett in eine geeignete Druckstellung für eine durch eine Schriftart- und/oder Formatidentifikationseinrichtung in der Verarbeitungseinrichtung ausgewählte Schriftart und/oder Format nach dem Start des Betriebs der Transporteinrichtung ansprechend auf die Betätigung der manuellen Einrichtung bewegt worden ist, um anschließend das Drucken durch den Druckkopf zu bewirken. Die Grenze zwischen benachbarten Etiketten auf dem Band kann dabei durch Synchronisierungsmarken gebildet werden.

Auch bei diesem Handetikettiergerät ist eine Anpassung der zu druckenden geometrischen Größe der Daten an das Format des Etiketts oder ein weitgehend beliebiges Plazieren der zu druckenden Daten auf dem Etikett nicht möglich, weil der Druckanfang des Druckbildes in einer festen Beziehung zu den detektierten Synchronisierungsmarken steht. Bis heute fühlen alle bekannten Geräte zum Bedrucken von Etiketten oder Tickets während des Transports des Bandes durch die Druckstation die Synchronisierungsmarken ab und starten den Druck entsprechend den starr vorgegebenen Format- und Datenvorgaben.

Durch die US-A-4,546,449 ist eine Ausgabeeinrichtung bekannt geworden, die ein automatisch abgeglichenes Ausgangsformat erzeugt und die den Charakter-Zeilenabstand und Randbreitenwerte in Abhängigkeit der Breite eines Aufzeich-nungsträgers und der Anzahl der Charakter pro Zeile, die auf den Aufzeichnungsträger gedruckt werden sollen, feststellt. Durch eine Einrichtung wird festgestellt, ob die Wiedergabe auf dem Aufzeichnungsträger in Abhängigkeit vom Charakter-Zeilenabstand und von Randbreitenwerten möglich ist. Eine Wiedergabeeinrichtung gibt die wiederzugebenden Charakter entsprechend dem festgestellten Ausgangsformat aus.

Die JP-A-4 294 179 betrifft ein Verfahren zum Bedrucken einer ganzen Seite für einen Testausdruck, selbst wenn das Format des im Drucker befindlichen Papiers zum Bedrucken einer ganzen Seite nicht geeignet ist. Der Drucker verkleinert automatisch die Größe der auf einer Seite zu druckenden Daten, indem die Anzahl der Charakter und Linien der zu druckenden Daten einer Seite gespeichert werden. Wenn ein Datenspeicher damit voll ist, werden die zu druckenden Daten auf die Größe der im Drucker befindlichen Papierkasette verkleinert, so daß die Daten aus Charakter und Linien auf eine Seite gedruckt werden können, jedoch nur in einem verkleinerten Maßstab.

### Technische Aufgabe:

Der Erfindung liegt die Aufgabe zugrunde, bei einem Verfahren der eingangs genannten Gattung die in einem Speicher abgelegte Information im Format, in der Schriftart und in der Schriftgröße an die Größe des Etiketts weitestgehend anzupassen.

### Offenbarung der Erfindung und deren Vorteile:

Die Lösung der Aufgabe ist dadurch gekennzeichnet, daß a) aus den Signalen des Sensors die aktuelle Länge (q,r,s) des Etiketts in Transportrichtung gemessen wird, b) eine in dem Speicher abgelegte virtuelle Struktur einer für den Druck bestimmten Information in Abhängigkeit von der gemessenen Länge des Etiketts und weiterer Vorgaben durch den Rechner so aufbereitet wird, daß geometrische Anpassungen der virtuellen Struktur an die aktuelle Länge bzw. an ein Format des Etiketts entstehen, wobei bei der Anpassung der Struktur gleichermaßen Zeichen und Zwischenräume verändert werden, c) die so erhaltene modifizierte virtuelle Struktur des Speicherinhaltes auf das Etikett abgebildet wird.

Das erfindungsgemäße Verfahren hat den Vorteil, daß die bisher zwangsläufige starre Zuordnung des Speicherinhaltes zum Abdruck des Bildes auf ein Etikett aufgehoben und voneinander getrennt wird. Das Verfahren unterscheidet sich von bisher angewendeten durch eine zwischen _{"}Speicherinhalt" (virtuelles Bild) und _{"}Abdruck" (visuelles Bild) geschaltete Einrichtung, die entsprechend eines Zielformates und weiterer Parameter den gleichen Speicherinhalt (virtuell) zum Abdruck (visuell) auf unterschiedliche Druckvorlagen von Etiketten ermöglicht. Die Einrichtung reduziert somit Speicheraufwand, Programmierungszeit und vereinfacht die Bedienung der Druckvorrichtung und erweitert insbesondere deren Einsatzbereich. Dadurch können nunmehr weitestgehend beliebige Formate oder Schriftarten oder -größen in Abhängigkeit der zu bedruckenden Fläche (Zielformat) des Etiketts entstehen, und eine praktisch beliebige Plazierung und Positionierung der zu druckenden Information bildlich auf dem Etikett ist möglich, wodurch die zur Verfügung stehende Druckfläche optimal genutzt wird, weil eine flexible Beziehung zwischen den detektierten Synchronisierungsmarken und der Gestaltung des Druckbildes gegeben ist. Aus den Signalen des Sensors wird die aktuelle Länge des Etiketts in Transportrichtung gemessen und die in einem Speicher abgelegte virtuelle Struktur der für den Druck bestimmten Informationen in Abhängigkeit von der gemessenen Länge des Etiketts so aufbereitet, daß nach Vorgaben geometrische Anpassungen der virtuellen Information an das Zielformat des Etiketts entstehen, die so erhaltenen modifizierten virtuellen Strukturen des Speicherinhaltes werden auf das Etikett abgebildet, indem mit den so erhaltenen Ergebnissen die Druckeinrichtung entsprechend beaufschlagt wird. Vorteilhaft können wichtige Informationen hervorgehoben, andere gleichbleibend gedruckt werden. Beispielsweise kann bei einem Preisetikett ein Barcode immer gleichbleibend groß, der zugehörige Preis hingegen immer maximal formatfüllend aufjedes Etikett gedruckt werden.

In vorteilhafter Weise sind Abbildungen auf dem Etikett ungleich dem Maßstab (Zoomfaktor) 1:1 möglich, beispielsweise vergrößert oder verkleinert. Vorteilhaft wird der Abbildungsmaßstab bzw. Zoomfaktor (Verhältnis der Größe des gespeicherten Bildes zum Zielformat des zu druckenden Bildes) so gewählt, daß er möglichst ein ganzzahliges Verhältnis bzw. Vielfaches zum Teilungsverhältnis des Druckrasters der Druckeinrichtung, insbesondere Thermodruckzeile des Thermodruckkopfes, bildet, was insbesondere beim Druck von maschinenlesbaren Schriften oder Codes notwendig ist, da ansonsten Aliasing-Störungen auftreten können.

Wenn der Zoomfaktor nichtganzzahlig ist, entstehen Konturstörungen (Aliasing) im Druckbild. Die subjektive Wahrnehmbarkeit dieser Konturstörungen wird erheblich vermindert, indem an den betreffenden Konturen die Druckpunkte mit einem Grauwert anstelle des maximalen Kontrasts gedruckt werden. Dazu können die Druckpunkte einer Drucklinie mit mindestens zwei (2) bit anstelle von einem (1) bit angesteuert werden. Aus dieser Darstellung mit 2 oder mehr bit werden unterschiedliche Integrationszeiten bzw. Stromwerte für die einzelnen Druckpunkte abgeleitet. Das bedeutet, daß der Zoomfaktor immer bestmöglich an das gegebene Druckraster angepaßt wird.

Beim Verfahren erfolgt der Druck des Formates bzw. der Information nicht mehr in starrer Zuordnung von den Synchronmarken, sondern das Druckbild wird vom Zielformat des Etiketts rechnerisch beeinflußt, d.h. in Bezug zum rechnerisch gewonnenen Abbild der Speicherinformation gewonnen. Bei Etiketten auf einem Trägerband wird die aktuelle Länge des Etiketts zu Beginn jedes Druckvorganges bestimmt und gespeichert. Bei der Eingabe verschiedenster Daten und/oder Formate und/ oder Schriftarten und -größen werden die zu druckenden Informationen mit dem zur Verfügung stehenden Zielformat bzw. Flächeninhalt der Druckfläche des Etiketts verglichen, wobei eine Anpassung der Formate und/oder Schriftarten und -größen an das Zielformat erfolgen kann einschließlich der Vorgabe von Grenzwerte. Damit sind Entscheidungen für ein Skalieren und Formatieren möglich, so daß die zu druckenden Informationen über die gesamte Druckfläche drucktechnisch ausgeweitet oder eingeschränkt werden können, wobei eine Symmetrierung oder ein Mittenbezug oder sonstiger Bezug des Druckbildes zum Zielformat vorgegeben werden kann und Fehldrucke, also nicht exakt bedruckte Etikett bzw. Etiketten, von vorneherein vermieden werden.

Des weiteren ist es möglich, automatisch nach Einlegen von neuen Etiketten oder einer neuen Rolle von Etiketten in die Vorrichtung zu überprüfen, ob die Etiketten gegebener Länge bzw. Druckfläche den Anforderungen der gerade ausgewählten Druckbilder entsprechen oder ob andere Druckbilder, Zeilenabstände, Formate, Schriften oder -größen vorgegeben werden müssen. Dabei lösen sowohl zulange als auch zu kurze Etiketten einen Druckvorgang nicht aus, falls nicht weitere Druckparameter, die in Speichern abgelegt sein können, zur Beurteilung der Positionierung zusätzlich mit einbezogen worden sind, beispielsweise, daß ein Etikett nach der letzten Drucklinie nicht länger als 2 mm Rand haben darf.

Da insbesondere die Generierung der modifizierten Strukturen (Informationen) des Speicherinhaltes und der Ausdruck drucklinienweise - somit für jede zu druckende Zielzeile neu - erfolgen kann, fällt die Zeit zum Generieren der modifizierten Strukturen in die Druckzeit für die jeweilige Zeile eines Etiketts, während des Papiertransportes der soeben gedruckten Zeile beginnt die Generierung der nächstfolgenden Zielzeile, was bedeutet, daß die Druckzeit trotz eventuell erheblicher Rechenleistung nicht erhöht wird. Die Generierung der modifizierten Strukturen des Speicherinhaltes kann etikettenweise erfolgen und anschließend das Etikett gedruckt werden, wobei in diesem Fall sich die Druckzeit zur Generierungszeit der modifizierten Informationen addiert, was aufgrund der kostengünstigen Apparatur bei besonderen Anwendungen vorteilhaft sein kann.

Die Verwendung eines Thermodruckers mit Thermodrucklinie ist vorzugsweise geeignet, weil damit insbesondere eine Miniatuisierung der Vorrichtung möglich ist. Wenn eine Miniatuisierung des Gerätes nicht im Vordergrund steht, können ebenso Laserdruck- oder Tintenstrahldruckwerke zur Anwendung gelangen.

### Kurzbeschreibung der Zeichnung, in der zeigen:

- Figur 1: a bis c verschiedene Etiketten, die fortlaufend auf einem Trägerband angeordnet sind
- Figur 2: eine aus verschiedenen Modulen bestehende Vorrichtung zum Bedrucken von Etiketten gemäß dem Verfahren und
- Figur 3: den zeitlichen Verlauf von wesentlichen Signalen des Verfahrens.

### Bevorzugte Ausführungsform der Erfindung:

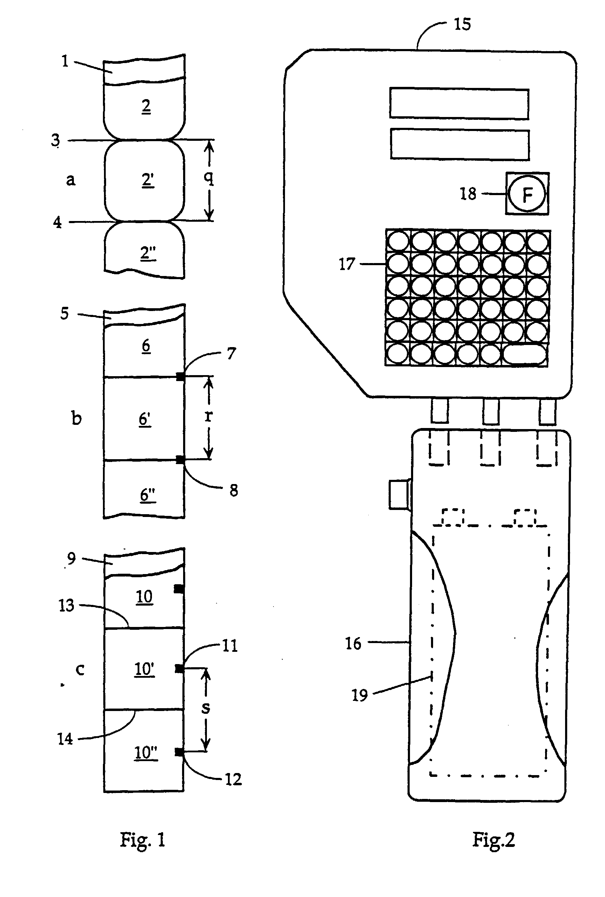

Die Figuren 1 a bis 1c zeigen auf Trägerbändern 1, 5 und 9 angeordnete Etiketten 2,2',2",6,6',6",10,10',10", deren aktuelle Länge q bzw. r bzw. s und deren Breite b ist. Die Etiketten sind in bekannter Weise durch Einkerbungen 3,4 des Abstandes q oder aufgedruckte Markierungen 7,8 des Abstandes r bzw. 11,12 des Abstandes s oder durch die vorlaufende Kante 14 und die nachlaufende Kante 13 des Abstandes s eines jeden Etiketts einzeln durch einen (nicht gezeigten) Sensor erfaßbar. Die Markierungen 11,12, von denen zwei benachbarte Markierungen jeweils den Abstand der aktuellen Länge eines Etiketts voneinander haben, können beliebig auf oder an den Etiketten plaziert sein.

Mit Einschalten des Druckwerkes wird der Transport der Etiketten 2,2',2", 6,6',6",10, 10',10" solange ausgelöst, bis durch den Sensor die ersten beiden aufeinanderfolgende Markierungen 3,4,7,8,11,12,13,14 des ersten oder der ersten beiden Etiketten in Transportrichtung detektiert werden, wobei mit diesen Signalen der Abstand q, r, s zweier Etiketten und damit die aktuelle Länge des Etiketts in Transportrichtung ermittelt und diese Länge im Speicher der Regel- und Recheneinheit zur Berechnung herangezogen und bis zur Vermessung des nächstfolgenden Etiketts gespeichert wird. U.a. mit diesen Signalen wird mittels einer Aufbereitungseinrichtung, die weitgehend softwaremäßige Verarbeitungseinrichtungen aufweisen kann, die Struktur der für den Druck bestimmten Information bzw. Daten im Speicher in Abhängigkeit von der aktuellen Länge des Etiketts so aufbereitet, daß eine vorgebbare geometrische Anpassung der Information an das Zielformat des Etiketts entsteht; mit den so erhaltenen Ergebnissen wird die Druckeinrichtung mittels einer Regeleinrichtung bzw. Regelung entsprechend geregelt und die modifizierten Strukturen (Information) des Speicherinhaltes in der vorgegebenen. Weise auf das Etikett gedruckt, wobei die Generierung der modifizierten Strukturen etikettenweise erfolgen und danach etikettenweise gedruckt werden kann und die Maße bzw. das Zielformat des vorhergehenden Etiketts zur Kontrolle und Berechnung des nächsten Etiketts benützt werden. Vorzugsweise kann jedoch die Generierung der Information des Speicherinhaltes bzw. die Generierung der modifizierten Strukturen auf das Zielformat des Etiketts drucklinienweise erfolgen, so daß die Zeit zum Generieren der modifizierten Strukturen in die Druckzeit für die Zeile fällt.

Die für den Druck bestimmte Information kann in mehrere logische Blöcke (Logos) aufgeteilt und für jeden Block können Koeffizienten definiert werden, die die Lageverschiebung und Größenveränderung in Abhängigkeit der Änderung der Länge bzw. Breite des Etiketts ergeben.

In gleicher Weise kann aus den Signalen des Sensors zusätzlich die aktuelle Breite des Etiketts 2,2',2"; 6,6',6"; 10,10',10" quer zur Transportrichtung gemessen werden und mit der ermittelten Länge und Breite des Etiketts der zu bedruckende Flächeninhalt auf dem Etikett festgelegt und mit dem rechnerischen Flächeninhalt des virtuellen Informationsabbild innerhalb des Speichers verglichen werden, woraus eine auf das Zielformat des Etiketts passende Formatierung der Daten gewonnen wird. Wenn die zu druckenden Daten auf das Zielformat des Etiketts passen, druckt die durch die Regel- und Recheneinheit geregelte Druckeinrichtung fortlaufend die modifizierten Informationen auf das Etikett. Überschreiten die zu druckenden Daten vorgegebene Grenzwerte des Zielformats des Etiketts, so wird der Druckvorgang gestoppt und ein Fehlersignal abgegeben.

Dadurch können beispielsweise bei zu großem Zielformat des Etiketts gegenüber dem rechnerischen Inhalt der Information im Speicher die zu druckenden Daten formatfüllend berechnet werden, wie eine Zentrierung der Daten oder Umrechnung in ein größeres Druckbild erfolgen. Oder bei zu kleinem Zielformat des Etiketts gegenüber dem rechnerischen Flächeninhalt der Information im Speicher können die zu druckenden Daten dergestalt umgerechnet werden, bis die neu berechneten Daten bis zu einem vorgebbaren Verkleinerungsmaß in das Zielformat des Etiketts passen, wobei gleichzeitig zeilenweise generiert und gedruckt werden kann.

Zur Ermittlung des bedruckbaren Flächeninhaltes bzw. des Zielformats des Etiketts kann der Sensor zur Ermittlung der Breite des Etiketts wenigstens quer zum Etikett verfahrbar angeordnet sein.

Figur 2 zeigt eine Vorrichtung zur Durchführung des Verfahrens in Modulbauweise bestehend zum Beispiels aus einem eine Eingabetastatur 17 aufweisenden Eingabe-Druckmodul 15, an den ein weiterer Modul 16 angekoppelt werden kann, der zum Beispiel eine Energieversorgung 19 sowie weitere Betätigungs- und Steuerelemente aufweisen kann. Der Eingabe-Druckmodul 15 kann einen eigenen Schalter "F" 18 besitzen, mit welchem der erfindungsgemäße Formatierungsvorgang per Hand ausgelöst und gestoppt werden kann.

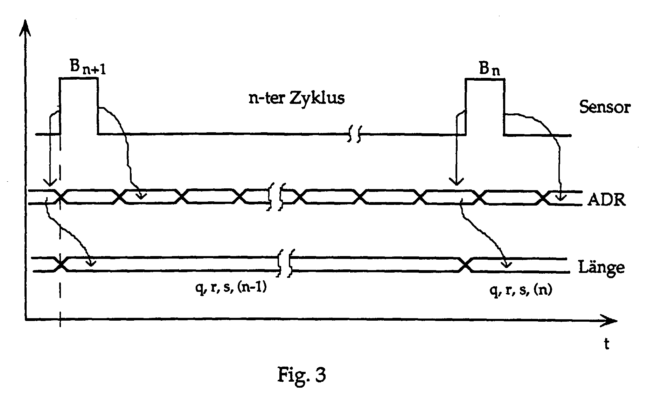

Figur 3 zeigt den Verlauf von wesentlichen Signalen des Verfahrens. Ein Sensor, beispielsweise eine Lichtschranke oder ähnliches, liefert die Synchronsignale Bn, Bn+1 u.s.w., z.B. in Form von Rechtecksignalen. Mit der Rückflanke (HL) der Rechtecksignale wird ein Adreßzähler ADR auf ø gesetzt, der zum Beispiel die Takte eines Schrittmotors bzw. Inkremente zählt, Mit der ansteigenden Flanke (LH) der Rechtecksignale wird das Ergebnis als Längenmessung in Inkrementen gespeichert und von der Regel- und Recheneinheit gelesen; der Adreßzähler kann ebenfalls durch die Regel-und Recheneinheit gelesen werden.

### Gewerbliche Anwendbarkeit:

Der Gegenstand der Erfindung ist insbesondere für den Etikettendruck in Druckvorrichtungen, wie Thermodruckwerke, einsetzbar, um beim Etikettendruck zum ersten Mal vorgegebene gespeicherte Informationen dem Zielformat der Etiketten formatfüllend oder formatsymmetrierend oder sonstwie formatspezifisch (Druckbeginn in einer Ecke) anzupassen und umzurechnen und diese umgerechneten Informationen dann zum Bedrucken freizugeben. Das bedeutet, daß alpha-numerische Zeichen, Schriftarten, -größen, Zeilenabstände, Bundgrößen u.a. automatisch geändert und dem Zielformat der Etiketten angepaßt werden können.

## Patentansprüche

1. Verfahren zum Bedrucken von Etiketten (2,2',2";6,6',6";10,10',10"), die einzeln oder auf einem Trägerband (1,5,9) angeordnet sind, mit einer Druckeinrichtung, bestehend aus Rechner, Speicher sowie Druckkopf, und einer Transporteinrichtung für variable oder konstante Geschwindigkeit und mit einer Synchronisationseinrichtung zum Synchronisieren des Papiertransportes, wobei Konturen (13,14) der Etiketten oder andere Markierungen (3,4;7,8; 11,12) während des Transportes der Etiketten durch die Druckeinrichtung mittels eines Sensors erfaßt und die daraus erzeugten Signale in der Druckeinrichtung verarbeitet werden,
dadurch gekennzeichnet, daß
a) aus den Signalen des Sensors die aktuelle Länge (q,r,s) des Etiketts (2,2',2";6,6',6";10,10',10") in Transportrichtung gemessen wird
b) eine in dem Speicher abgelegte virtuelle Struktur einer für den Druck bestimmten Information in Abhängigkeit von der gemessenen Länge des Etiketts und weiterer Vorgaben durch den Rechner so aufbereitet wird, daß geometrische Anpassungen der virtuellen Struktur an die aktuelle Länge bzw. an ein Format des Etiketts entstehen, wobei bei der Anpassung der Struktur gleichermaßen Zeichen und Zwischenräume verändert werden
c) die so erhaltene modifizierte virtuelle Struktur des Speicherinhaltes auf das Etikett abgebildet wird.

2. Verfahren nach Anspruch 1, dadurch gekennzeichnet,
daß aus den Signalen des Sensors zusätzlich die aktuelle Breite des Etiketts (2,2',2"; 6,6',6"; 10,10',10") quer zur Transportrichtung gemessen wird.

3. Verfahren nach Anspruch 1 oder 2, dadurch gekennzeichnet,
daß der Zoomfaktor, d.h. das Verhältnis der Größe des gespeicherten Bildes zum Zielformat des zu druckenden Bildes, zum Teilungsverhältnis, des Druckrasters der Druckeinrichtung, insbesondere Thermodruckzeile eines Thermodruckkopfes, möglichst ein ganzzahliges Verhältnis bzw. Vielfaches bildet.

4. Verfahren nach Anspruch 1 oder 2, dadurch gekennzeichnet,
daß bei maschinenlesbaren Schriften oder Codes, wie Bacodes, der Zoomfaktor ganzzahlig gewählt wird.

5. Verfahren nach Anspruch 1 oder 2, dadurch gekennzeichnet,
daß bei nichtganzzahligem Verhältnis bzw. Vielfachen des Zoomfaktors die Unschärfe in Bezug auf das Druckraster durch eine Zuordnung von wenigstens einer Grauwertstufe zu den betreffenden Druckpunkten reduziert wird, wobei insbesondere die entsprechenden Druckpunkte mit mindestens 2 bit anstelle von 1 bit angesteuert und aus dieser Darstellung unterschiedliche Integrationszeiten bzw. Stromwerte für die einzelnen Druckpunkte abgeleitet werden.

6. Verfahren nach Anspruch 1 oder 2, dadurch gekennzeichnet,
daß über eine Eingabeschnittstelle und/oder Tastatur von Hand der Sollwert der Länge (q,r,s) und/oder Breite der Etiketten (2,2',2";6,6',6";10,10',10") und/oder der Toleranzen dieser Maße eingegeben werden und genau dann ein Fehlersignal generiert wird, wenn die Länge und/oder Breite des Etiketts außerhalb der vorgegebenen Intervalle liegt.

7. Verfahren nach Anspruch 1 oder 2 bei Verwendung eines Thermodruckkopfes mit Thermodruckzeile, dadurch gekennzeichnet,
daß die Generierung der modifizierten Strukturen des Speicherinhaltes drucklinienweise erfolgt, so daß die Zeit zum Generieren der modifizierten Strukturen in die Druckzeit einer Zeile fällt.

8. Verfahren nach Anspruch 6, dadurch gekennzeichnet,
daß das Fehlersignal so weiter verarbeitet wird, daß der Druck gestoppt und ein Alarmsignal ausgelöst wird.

9. Verfahren nach Anspruch 1, dadurch gekennzeichnet,
daß die für den Druck bestimmte Information in mehrere logische Blöcke, Logos, aufgeteilt wird und für jeden Block Koeffizienten definiert werden, die die Lageverschiebung und Größenveränderung in Abhängigkeit der Änderung der Länge bzw. Breite des Etiketts (2,2',2";6,6',6";10,10',10") ergeben.

10. Verfahren nach Anspruch 1 oder 2, dadurch gekennzeichnet,
daß zum Messen der aktuellen Länge des Etiketts (2,2',2";6,6',6";10,10',10") in Transportrichtung bei Verwendung eines Schrittmotors die Zählung der Schritte, bei Verwendung eines Gleichstrommotors z.B. die Inkremente eines Inkrementalgebers des Gleichstrommotors herangezogen werden.

11. Verfahren nach Anspruch 1 oder 2, dadurch gekennzeichnet,
daß bei Verwendung einer Thermodruckplatine alle Druckpunkte derselben mit Stromwerten bestromt werden, die Grauwerten entsprechen.

12. Verfahren nach Anspruch 1 oder 2, dadurch gekennzeichnet,
daß der Sensor eine photosensitive Zeile ist.

13. Verfahren nach Anspruch 1 oder 2, dadurch gekennzeichnet,
daß zu seiner Durchführung als Druckeinrichtung ein Laserdrucker oder ein Tintenstrahldrucker verwendet wird.

## Claims

1. Process for printing labels (2, 2', 2"; 6, 6', 6"; 10, 10', 10") which are arranged individually or on a conveyor belt (1, 5, 9), with a printing device consisting of a computer, a memory as well as a printing head, and with a transport device that allows a variable or constant speed, as well as with a synchronization device that serves to synchronize the paper transport, whereby contours (13, 14) of the label or other markings (3, 4; 7, 8; 11, 12) are detected by a sensor during the transport of the labels through the printing device and the signals generated on this basis are then processed in the printing device,
characterized in that
a) on the basis of the signals, the actual length (q, r, s) of the label (2, 2', 2"; 6, 6', 6"; 10, 10', 10") is measured in the direction of transport,
b) a virtual structure stored in the memory and containing information intended for the printing procedure - as a function of the measured length of the label and of other default values - is processed by the computer in such a manner that geometrical adaptations of the virtual structure to the actual length or to a format of the label are made, whereby characters and spaces are Likewise changed during the adaptation procedure,
c) the thus obtained modified virtual structure of the contents of the memory is printed on the label.

2. Process according to Claim 1, characterized in that,
on the basis of the signals from the sensor, the actual width of the label (2, 2', 2"; 6, 6', 6"; 10, 10', 10") is additionally measured perpendicular to the direction of transport.

3. Process according to Claim 1 or 2, characterized in that
the zoom factor, that is to say, the ratio of the size of the stored image to the target format of the image to be printed, whenever possible, forms an integral ratio or a multiple thereof with respect to the quotient of the printing screen of the printing device, particularly the thennal printing lines of a thermal printing head,

4. Process according to Claim 1 or 2, characterized in that
the zoom factor is selected as an integral number in the case of machine-readable lettering or codes, such as bar codes.

5. Process according to Claim 1 or 2, characterized in that,
if the ratio or the multiple of the zoom factor is not an integral number, the lack of focus with respect to the printing screen is reduced by means of an allocation of at least one gray scale value to the printing points in question, whereby especially the appertaining printing points are addressed by at least 2 bits instead of 1 bit and then differing integration times or current values are derived for the individual printing points.

6. Process according to Claim 1 or 2, characterized in that,
an input interface and/or a keyboard is used to manually enter the target value for the length (q, r, s) and/or the width of the label (2, 2', 2"; 6, 6', 6"; 10, 10', 10") and/or the tolerances of these dimensions and an error signal is generated precisely when the length and/or width ofthe label falls outside of the prescribed intervals.

7. Process according to Claim 1 or 2 with the utilization of a thermal printing head with thermal printing lines, characterized in that
the generation of the modified structures of the contents of the memory is done one printed line at a time, so that the time needed to generate the modified structures falls within the time needed to print one line.

8. Process according to Claim 6, characterized in that
the error signal is further processed in such a way that the printing procedure is stopped and an alarm signal is triggered.

9. Process according to Claim 1, characterized in that
the information intended for the printing procedure is divided into several logical blocks, logos, and, for each block, coefficients are defined which result in a shift in position and a change in size as a function of the change in the length or width of the label (2, 2', 2"; 6, 6', 6"; 10, 10', 10").

10. Process according to Claim 1 or 2, characterized in that
in order to measure the actual length of the label (2, 2', 2"; 6, 6', 6"; 10, 10', 10") in the transport direction, when a stepping motor is employed, the steps are counted, whereas, when a direct-current motor is employed, for example, the increments of an incremental transmitter of the direct-current motor are used.

11. Process according to Claim 1 or 2, characterized in that,
when a thermal printing plate is used, all of the printing points thereof have to be supplied with current values that correspond to the gray scale values.

12. Process according to Claim 1 or 2, characterized in that
the sensor is a photosensitive line.

13. Process according to Claim 1 or 2, characterized in that,
for its execution, a laser printer or an ink-jet printer is used as the printing device.

## Revendications

1. Procédé permettant d'imprimer des étiquettes (2,2',2";6,6',6";10,10',10") disposées une par une ou sur une bande-support (1,5,9), au moyen d'un dispositif d'impression qui se compose d'un calculateur, d'une mémoire et d'une tête d'impression, ainsi que d'un dispositif de transport à vitesse variable ou constante, et d'un dispositif de synchronisation pour synchroniser le transport du papier, opération au cours de laquelle les contours (13,14) des étiquettes ou autres repères (3,4;7,8;11,12) sont saisies par un détecteur du dispositif d'impression pendant le passage des étiquettes, et les signaux ainsi générés sont traités par le dispositif d'impression,
caractérisé en ce que
a) à partir des signaux émis par le détecteur, la longueur actuelle (2,2',2"; 6,6',6";10,10',10") est calculée dans le sens de transport,
b) une structure virtuelle d'une information destinée à l'impression et stockée dans la mémoire, est traitée par le calculateur en fonction de la longueur mesurée de l'étiquette ainsi que d'autres données, de façon à ce que la structure virtuelle soit adaptée géométriquement à la longueur actuelle ou à un format de l'étiquette, les caractères ainsi que les espaces étant modifiés lors de cette adaptation,
c) la structure virtuelle modifiée du contenu de la mémoire qui est ainsi obtenue est reproduite sur l'étiquette.

2. Procédé selon la revendication 1, caractérisé en ce que,
à partir des signaux émis par le détecteur, la largeur actuelle de l'étiquette (2,2',2";6,6',6";10,10',10") est mesurée en supplément dans le sens perpendiculaire au sens de transport.

3. Procédé selon l'une des revendications 1 ou 2, caractérisé en ce que
le facteur de zoom, c'est-à-dire le rapport entre la grandeur de l'image mémorisée et le format cible de l'image à imprimer, est si possible un rapport entier ou un multiple du rapport de division de la trame d'impression du dispositif d'impression, en particulier ligne d'impression thermique d'une tête d'impression thermique.

4. Procédé selon l'une des revendications 1 ou 2, caractérisé en ce que,
dans le cas de caractères ou de codes exploitables sur machine, tels que les codes à barres, un facteur de zoom à nombres entiers est choisi.

5. Procédé selon l'une des revendications 1 ou 2, caractérisé en ce que,
dans le cas de rapports du facteur de zoom qui ne sont pas des nombres entiers ou des multiples, le manque de netteté par rapport à la trame est réduit par l'attribution d'au moins un échelon de la gamme de gris aux points d'impression concemés, les points d'impression correspondants étant générés notamment par au moins 2 bits au lieu d'1 bit, et différents temps d'intégration ou valeurs de courant pour les différents points d'impression étant déduits à partir de cette représentation.

6. Procédé selon l'une des revendications 1 ou 2, caractérisé en ce que,
via une interface d'entrée et/ou un clavier, on entre manuellement les valeurs de consigne de la longueur (q,r,s) et/ou de la largeur des étiquettes (2,2',2"; 6,6',6";10,10',10") et/ou des tolérances de ces cotes, et qu'un signal erreur est généré au moment où les valeurs de longueur et/ou de largeur de l'étiquette sont en dehors de l'intervalle prédéterminé.

7. Procédé selon l'une des revendications 1 ou 2 ayant recours à une tête d'impression thermique avec ligne d'impression thermique, caractérisé en ce que
la génération des structures modifiées du contenu de la mémoire s'effectue par ligne d'impression, si bien que le temps nécessaire à la génération des structures modifiées tombe dans le temps d'impression d'une ligne.

8. Procédé selon la revendication 6, caractérisé en ce que
le signal d'erreur est traité de sorte que l'impression soit arrêtée et qu'un signal d'alarme soit déclenché.

9. Procédé selon la revendication 1, caractérisé en ce que
l'information destinée à être imprimée est divisée en plusieurs blocs logiques ou logos, et que pour chacun de ces blocs sont définis des coefficients qui donnent le décalage de la position et la modification de la taille en fonction des modification des valeurs de la longueur ou de la largeur de l'étiquette (2,2',2"; 6,6',6";10,10'10").

10. Procédé selon l'une des revendications 1 ou 2, caractérisé en ce que,
pour la mesure de la longueur actuelle de l'étiquette (2,2',2";6,6',6";10,10'10") dans le sens de transport, lorsqu'on emploie un moteur pas à pas, on aura recours au comptage des pas, et lorsqu'on emploie un moteur à courant continue, ce seront par exemple les incréments d'un générateur d'incréments du moteur à courant continu qui seront comptés.

11. Procédé selon l'une des revendications 1 ou 2, caractérisé en ce que,
lorsqu'on emploie une platine d'impression thermique, tous les points d'impression de la platine reçoivent des valeurs de courant qui correspondent à des valeurs de gris.

12. Procédé selon l'une des revendications 1 ou 2, caractérisé en ce que
le détecteur est une ligne photo-sensitive.

13. Procédé selon l'une des revendications 1 ou 2, caractérisé en ce que
pour l'exécution de ce procédé à titre de dispositif d'impression, on emploie une imprimante laser ou une imprimante à jet d'encre.
